Europäisches Patentamt

European Patent Office

Office européen des brevets

(19)

(11) Numéro de publication: **0 174 234**
**A1**

(12) **DEMANDE DE BREVET EUROPEEN**

(21) Numéro de dépôt: **85401576.5**

(22) Date de dépôt: **01.08.85**

(51) Int. Cl.⁴: **H 01 B 11/18**
**G 01 F 23/26**

(30) Priorité: **06.08.84 FR 8412407**

(43) Date de publication de la demande:
**12.03.86 Bulletin 86/11**

(84) Etats contractants désignés:
**DE GB IT NL**

(71) Demandeur: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Bon Mardion, Michel**
**26, rue de la Plaine**
**F-38160 Gieres(FR)**

(72) Inventeur: **Duret, Denis**
**82, rue Mallifaud**
**F-38100 Grenoble(FR)**

(72) Inventeur: **Locatelli, Marcel**
**4, Pré Morard Montbonnot Saint Martin**
**F-38330 Saint Ismier(FR)**

(74) Mandataire: **Mongrédien, André et al,**
**c/o BREVATOME 25, rue de Ponthieu**
**F-75008 Paris(FR)**

(54) **Ligne coaxiale pour dispositif cryogénique.**

(57) Ligne coaxiale pour cryogénie.

Cette ligne comporte, de manière connue, un conducteur central (6) entouré d'un diélectrique (8) lui-même entouré d'un conducteur extérieur (10); selon l'invention, le diélectrique (8) a une grande porosité ouverte et le conducteur extérieur (10) présente une ouverture telle qu'une fente longitudinale ou spirale (12) pour permettre la pénétration des vapeurs froides à l'intérieur de la ligne coaxiale.

Application à l'utilisation des systèmes cryogèniques dans le domaine de l'électronique.

Figure 5.

FIG. 5

EP 0 174 234 A1

## Ligne coaxiale pour dispositif cryogénique

La présente invention a pour objet un conducteur coaxial utilisable dans un système cryogénique sans apporter de perturbations thermiques importantes.

On utilise de plus en plus à l'heure actuelle les systèmes cryogéniques dans le domaine de l'électronique. Pour cela, on utilise souvent des lignes coaxiales qui sont constituées d'un conducteur central ou âme métallique pleine entourée d'un diélectrique plein ou ajouré, lui-même entouré d'un conducteur extérieur ayant généralement la forme d'un tube. Ce dernier est réalisé en métal bon conducteur de l'électricité, mais mauvais conducteur de la chaleur. Pour les lignes de faible diamètre extérieur, c'est-à-dire de diamètre inférieur à 10 mm, la conduction thermique est limitée. Cependant, si le tube extérieur peut échanger de la chaleur avec les vapeurs froides du dispositif dans lequel il se trouve, ce n'est pas le cas pour le diélectrique et l'âme intérieure. C'est ainsi que la puissance thermique apportée par la ligne coaxiale peut être relativement importante du fait de l'isolation électrique et souvent thermique. Le diélectrique et l'âme n'échangent pas de chaleur avec les vapeurs froides et la puissance thermique apportée à la ligne coaxiale n'est pas négligeable.

La présente invention a justement pour objet de remédier à cet inconvénient en proposant une ligne coaxiale qui permette à tous ces éléments d'échanger de la chaleur avec les vapeurs froides dans lesquelles se trouve le dispositif et qui n'apporte pas de perturbations thermiques importantes.

Selon la principale caractéristique de la ligne coaxiale objet de l'invention, celle-ci, du type comportant un conducteur central ou âme entouré d'un diélectrique lui-même entouré d'un conducteur exté-

rieur ayant sensiblement la forme d'un tube, se caractérise en ce que le diélectrique présente une grande porosité ouverte et en ce que le conducteur extérieur présente au moins une ouverture permettant la pénétration de vapeurs froides à l'intérieur du dispositif.

Cette ouverture peut être une fente longitudinale ou en forme de spirale, ou encore le conducteur extérieur peut être constitué de plusieurs éléments qui se recouvrent partiellement sans contact dans certaines zones afin de ménager des ouvertures, la continuité électrique du conducteur extérieur étant cependant maintenue.

Quant au diélectrique, il peut être soit constitué d'un matériau à porosité importante, soit constitué d'un matériau non poreux mais qui ne remplit pas tout l'espace compris entre les conducteurs intérieur et extérieur afin de laisser passer les vapeurs froides. Dans ce cas, le diélectrique peut avoir une forme hélicoïdale ou être constitué de plusieurs éléments séparés les uns des autres dont chacun est en contact avec le conducteur central d'une part, et avec le conducteur extérieur d'autre part.

Enfin, suivant une autre caractéristique de l'invention, le conducteur central peut lui-même avoir la forme d'un tube creux dans lequel est ménagée au moins une ouverture afin de favoriser encore les échanges de chaleur.

L'invention apparaîtra mieux à la lecture de la description qui va suivre, donnée à titre d'exemple purement illustratif et nullement limitatif, en référence aux dessins annexés, dans lesquels :

- la figure 1 est une vue schématique en coupe d'une ligne coaxiale classique disposée dans un vase cryogénique,

- les figures 2a à 2c sont des vues schématiques en coupe illustrant plusieurs modes de réalisation possibles d'une ligne coaxiale selon l'invention,

B 8210.3  JR

    - la figure 3 est une vue schématique en coupe longitudinale d'une ligne coaxiale selon l'invention équipée d'un diélectrique de forme hélicoïdale,

    - la figure 4 est une vue schématique en perspective partiellement éclatée illustrant un autre mode de réalisation de la ligne coaxiale objet de l'invention dans le cas où le diélectrique est constitué d'éléments séparés les uns des autres,

    - la figure 5 est une vue schématique d'une ligne coaxiale selon l'invention dont le conducteur extérieur est muni d'une fente en spirale,

    - la figure 6 est une vue semblable à la figure 5, illustrant un mode de réalisation dans lequel le conducteur extérieur présente une fente longitudinale,

    - la figure 7 est une vue en perspective et en coupe partielle illustrant un autre mode de réalisation d'une ligne coaxiale selon l'invention où le conducteur extérieur est constitué d'éléments se recouvrant partiellement, et

    - la figure 8 est une vue semblable à la figure 1 illustrant une application particulière du coaxial selon l'invention à la détection et au contrôle du niveau d'une masse d'hélium liquide.

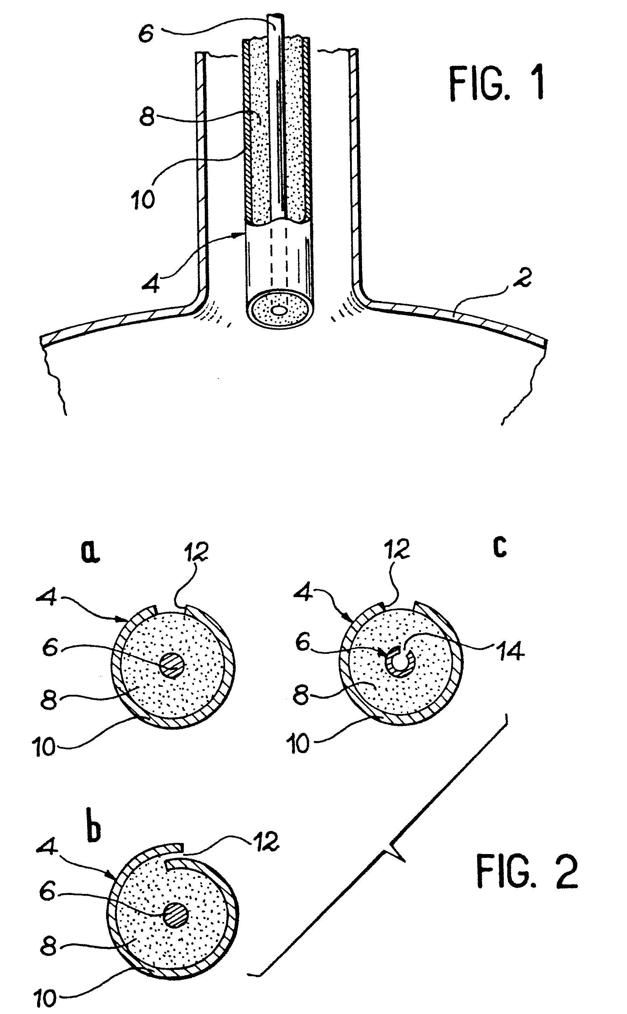

    La vue en coupe de la figure 1 montre un dispositif cryogénique se composant d'un réservoir 2 contenant par exemple de l'hélium liquide, dans lequel est introduit un coaxial 4 se composant de manière classique d'un conducteur central 6 entouré d'un isolant ou diélectrique 8 lui-même entouré d'un conducteur extérieur 10 en forme de tube. Un tel coaxial peut être utilisé par exemple pour relier un appareil (non représenté) situé dans la masse d'hélium liquide contenue dans le récipient 2 à des moyens de mesure extérieurs (non représentés). Dans la plupart des lignes coaxiales

actuelles, le conducteur extérieur 10 est réalisé en un métal bon conducteur de l'électricité mais mauvais conducteur de la chaleur, comme par exemple en acier inoxydable argenté.

Ceci empêche les échanges thermiques avec les vapeurs froides se trouvant dans le récipient 2 au voisinage de la ligne 4, et le diélectrique 8 ainsi que le conducteur central 6 peuvent s'échauffer : leur impédance peut varier, ce qui risque de fausser les mesures. Pour remédier à cet inconvénient, l'invention propose une ligne coaxiale perfectionnée dont le conducteur extérieur 10 présente au moins une fente et dont le diélectrique est constitué de matériaux présentant une forte porosité ouverte ou de matériaux compacts mais constitués de façon à ménager des espaces libres ; l'ensemble permet aux vapeurs froides de pénétrer à l'intérieur du coaxial et d'établir un équilibre thermique entre le conducteur central 6, le diélectrique 8, le conducteur extérieur 10 et l'atmosphère extérieure.

Les vues en coupe des figures 2a-2c illustrent trois modes de réalisation possibles d'un coaxial selon l'invention. Dans les trois cas, le diélectrique est du type défini précédemment.

Sur la figure 2a, le conducteur extérieur 10 présente une fente 12 pour le passage des vapeurs froides.

Dans le cas de la figure 2b, les deux lèvres 12 du conducteur extérieur 10 se chevauchent afin de limiter les pertes électriques.

Dans le cas de la figure 2c, en plus de la fente 12 dans le conducteur extérieur 10, le conducteur central 6 présente lui aussi une fente 14.

Toutes ces dispositions favorisent les échanges thermiques avec les vapeurs froides entourant le coaxial.

B 8210.3   JR

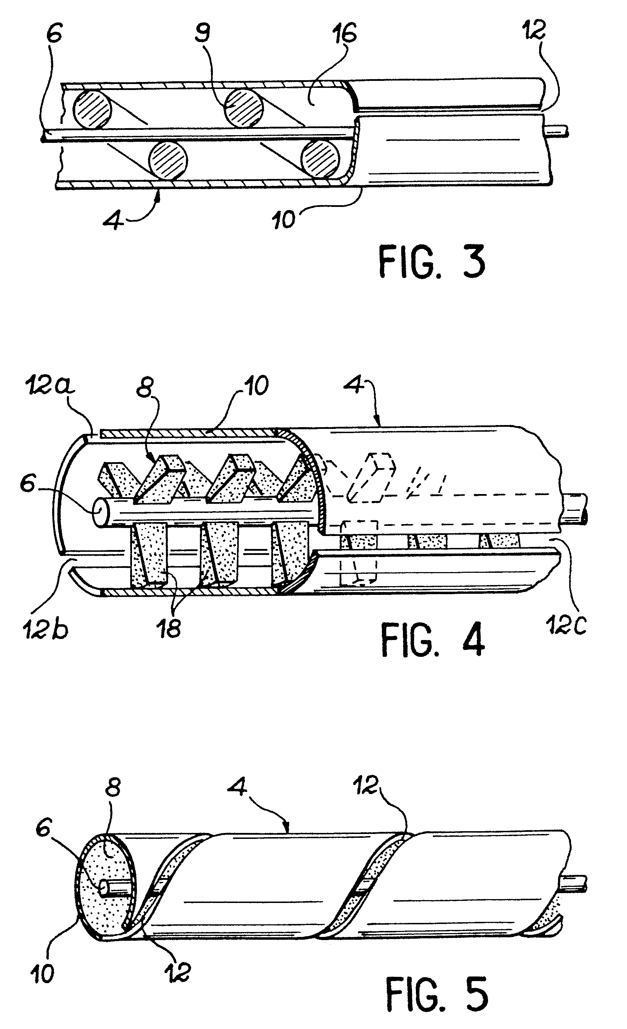

La vue en coupe de la figure 3 illustre un premier mode de réalisation dans lequel le diélectrique est un fil 9 bobiné en hélice sur le conducteur central 6. Le conducteur extérieur 10 possède une fente. On ménage ainsi un espace hélicoïdal 16 entre les conducteurs extérieur et intérieur, ce qui permet aux vapeurs froides de pénétrer à l'intérieur du dispositif et d'entrer en contact avec le diélectrique et le conducteur intérieur.

La figure 4 illustre un autre mode de réalisation de la ligne coaxiale selon l'invention, dans lequel le conducteur extérieur 10 est pourvu de trois fentes longitudinales parallèles 12a, 12b, 12c. Dans ce mode de réalisation, le diélectrique 8 est constitué de pièces 18 de section trapézoïdale dont les extrémités sont en contact d'une part avec le conducteur central 6 et d'autre part avec la face interne du conducteur extérieur 10. Dans l'exemple représenté, les éléments 18 sont assemblés par groupes de trois dans une section droite du coaxial, les groupes étant régulièrement répartis le long du conducteur central 6 et séparés les uns des autres. On ménage ainsi un espace important entre les conducteurs interne et externe, ce qui permet une forte pénétration de vapeurs froides à l'intérieur du dispositif. Bien entendu, l'homme de l'art peut faire varier en fonction de chaque cas particulier la forme, le nombre et la disposition des éléments 18.

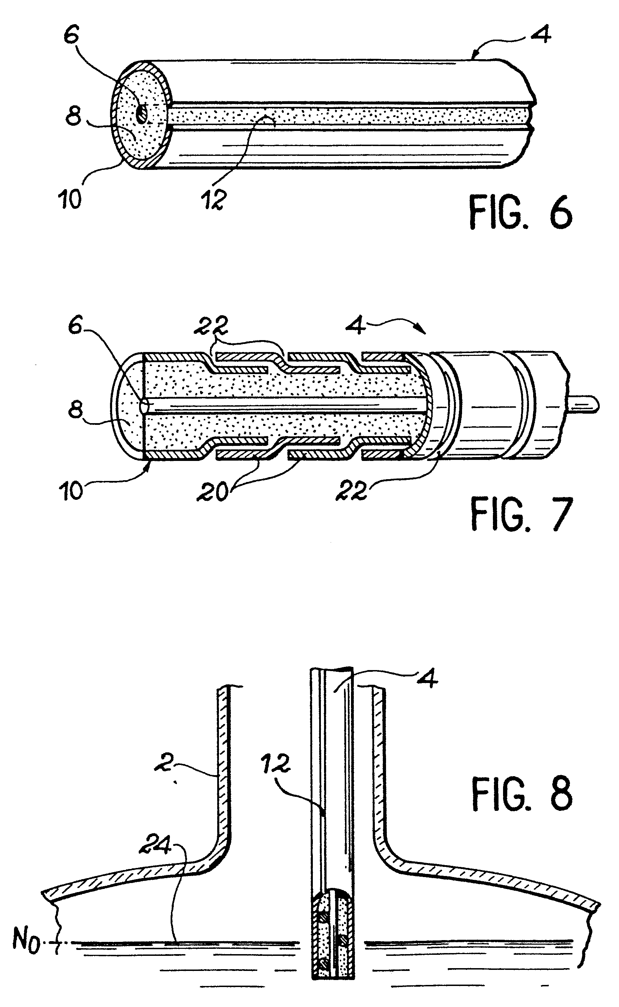

La figure 5 illustre un mode de réalisation dans lequel le conducteur extérieur 10 est muni d'une seule fente 12 ayant une forme d'hélice. Dans le cas de la figure 6, le conducteur extérieur est équipé d'une fente 12 parallèle à son axe, tandis que, dans le cas de la figure 7, le conducteur extérieur 10 est constitué d'un certain nombre d'éléments tels que 20 qui se chevauchent partiellement sans être en contact les uns

B 8210.3   JR

avec les autres  pour certaines portions de façon à ménager des fentes 22 qui permettent la pénétration des vapeurs froides à l'intérieur du dispositif. Il est bien entendu que les éléments 20 doivent être en contact les uns avec les autres à d'autres endroits afin d'assurer la continuité électrique de l'ensemble.

La figure 8 illustre une application particulière du coaxial selon l'invention à la détection du niveau d'une masse d'hélium liquide.

On voit sur cette figure un récipient 2 semblable au récipient 2 de la figure 1 et qui contient une masse 24 d'hélium liquide dans laquelle plonge une ligne coaxiale conforme à l'invention, portant la référence 4 et dont l'extrémité se trouve au-dessous du niveau $N_0$. Si l'interface entre le liquide et sa vapeur se trouve au niveau de la ligne, l'impédance de celle-ci peut varier du fait de la différence entre les constantes diélectriques de la vapeur et du liquide. On peut alors détecter le niveau de la masse d'hélium liquide. On peut établir un contrôle complet du niveau de cette masse en déclenchant, grâce à un appareillage approprié, une alimentation qui maintient le niveau sensiblement constant.

Ainsi, la ligne coaxiale objet de l'invention présente des avantages intéressants, dont le principal est de ne pas apporter de perturbations thermiques importantes à l'intérieur d'un dispositif cryogénique, puisque tous les éléments constituant cette ligne se trouvent à la même température qui est celle des vapeurs froides environnantes. De plus, de tels dispositifs sont simples à réaliser et trouvent de nombreuses applications soit pour l'étude de phénomènes électriques ou électroniques se déroulant à très basse température, soit pour contrôler le niveau d'une masse d'hélium ou d'un autre gaz liquéfié.

## REVENDICATIONS

1. Ligne coaxiale utilisable dans un dispositif cryogénique, du type comportant un conducteur central ou âme (6) entouré d'un diélectrique (8) lui-même entouré d'un conducteur extérieur (10) ayant sensiblement la forme d'un tube, caractérisée en ce que le diélectrique (8) présente une grande porosité ouverte et en ce que le conducteur extérieur (10) présente au moins une ouverture (12) permettant la pénétration de vapeurs froides à l'intérieur du dispositif.

2. Ligne coaxiale selon la revendication 1, caractérisée en ce que ladite ouverture (12) est une fente longitudinale.

3. Ligne coaxiale selon la revendication 1, caractérisée en ce que ladite ouverture (12) est une fente en forme de spirale.

4. Ligne coaxiale selon la revendication 1, caractérisée en ce que le conducteur extérieur (10) est constitué de plusieurs éléments (20) se recouvrant partiellement sans contact dans certaines zones afin de ménager des ouvertures (22), la continuité électrique dudit conducteur extérieur (10) étant cependant maintenue.

5. Ligne coaxiale selon l'une quelconque des revendications 1 à 4, caractérisée en ce que le diélectrique (8) a une forme hélicoïdale.

6. Ligne coaxiale selon l'une quelconque des revendications 1 à 4, caractérisée en ce que le diélectrique (8) se compose de plusieurs éléments (18), séparés les uns des autres et dont chacun est en contact avec le conducteur central (6) et avec le conducteur extérieur (10).

7. Ligne coaxiale selon l'une quelconque des revendications 1 à 6, caractérisée en ce que le conducteur central (6) a lui-même la forme d'un tube creux présentant au moins une ouverture (14).

8. Application de la ligne coaxiale selon l'une quelconque des revendications 1 à 7 à la détection de niveaux.

FIG. 1

FIG. 2

FIG. 3

FIG. 4

FIG. 5

FIG. 6

FIG. 7

FIG. 8

Office européen
des brevets

**RAPPORT DE RECHERCHE EUROPEENNE**

**0174234**

Numero de la demande

EP  85 40 1576

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | FR-A-1 519 679 (GEOFFROY-DELORE) * Page 1, colonne 1, alinéa 9 - colonne 2, alinéa 4; figure 1 * | 1 | H 01 B 11/18 G 01 F 23/26 |
| A | US-A-3 477 290 (LERNER) * Colonne 2, ligne 47 - colonne 6, ligne 41; figures 1-3 * | 1,7,8 | |
| A | FR-A-1 150 389 (LODGE PLUGS) * Page 1, colonne 2, alinéa 5 - page 2, colonne 2, alinéa 2; figures * | 1 | |
| A | GB-A- 584 153 (STANDARD TELEPHONES AND CABLES LTD.) * Page 4, ligne 62 - page 5, ligne 87; figures 1-8 * | 1,5,6 | |
| A | DE-A-1 934 277 (VEREINIGTE DRAHT- UND KABELWERKE) * Page 3, alinéa 3; figures * | 1,2,6 | DOMAINES TECHNIQUES RECHERCHES (Int Cl 4)  H 01 B H 01 P G 01 F |

Le present rapport de recherche a été établi pour toutes les revendications

| Lieu de la recherche | Date d'achèvement de la recherche | Examinateur |
|---|---|---|
| LA HAYE | 15-11-1985 | DEMOLDER |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82